# EUROPÄISCHE PATENTANMELDUNG

(11) **EP 3 173 395 A1**
(43) Veröffentlichungstag der Anmeldung: **31.05.2017**
(21) Anmeldenummer: 16199775.4
(22) Anmeldetag: 21.11.2016
(51) Int. Cl.: C04B 41/00, C04B 41/52, C04B 28/04, C04B 28/06, C04B 28/14, C04B 111/00

(54) **BESCHICHTUNGSSYSTEM FÜR BETONOBERFLÄCHEN**

(30) Priorität: 24.11.2015 DE 102015223197
(71) Anmelder: Dresdner Lackfabrik novatic GmbH Co. KG, 01099 Dresden (DE)
(72) Erfinder: Rother, Joachim, 14532 Kleinmachnow (DE); Braun, Alexander, 06386 Osternienburger Land OT Großpaschleben (DE); Zill, Alexander, 01445 Radebeul (DE)
(74) Vertreter: Kailuweit & Uhlemann Patentanwälte Partnerschaft mbB

(57) **Zusammenfassung**

Die Erfindung betrifft ein Beschichtungssystem für Betonoberflächen umfassend eine Grundbeschichtung als 3K-System, welche eine wasserverdünnbare Bindemittelkomponente und ein anorganisches, mineralisches Bindemittel umfasst, und eine Deckbeschichtung, wobei die wasserverdünnbare Bindemittelkomponente in der Grundbeschichtung mindestens eine niedrigmolekulare EP-Harz-Komponente und mindestens eine EP-Härter-Komponente umfasst und wobei die Deckbeschichtung ausgewählt ist aus einem wasserverdünnbaren 2K-PUR-Lack oder einem wasserverdünnbaren 1-K-Lack.

## Beschreibung

Die Erfindung betrifft ein Beschichtungssystem für Betonoberflächen umfassend eine Grundbeschichtung als 3K-System, welche eine wasserverdünnbare Bindemittelkomponente und ein anorganisches, mineralisches Bindemittel umfasst, und eine Deckbeschichtung, wobei die wasserverdünnbare Bindemittelkomponente in der Grundbeschichtung mindestens eine niedrigmolekulare EP-Harz-Komponente und mindestens eine EP-Härter-Komponente umfasst und wobei die Deckbeschichtung ausgewählt ist aus einem wasserverdünnbaren 2K-PUR-Lack oder einem wasserverdünnbaren 1-K-Lack.

Betonoberflächen sind, besonders im Außenbereich, Umwelteinflüssen ausgesetzt, die das Material schnell schädigen, zerstören und optisch negativ beeinflussen können. Verschiedene Beschichtungssysteme auf Polymerbasis haben sich etabliert, um die Oberflächen zu versiegeln und damit zu schützen.

Dabei kommen sowohl Ein- als auch Mehrschichtsysteme zum Einsatz, die besonderen Ansprüchen unterliegen. Die wichtigsten Anforderungen an diese Beschichtungen sind eine extrem gute Wetterbeständigkeit in Verbindung mit einer sehr guten Haftung auf der zu schützenden Betonoberfläche, so dass ein langzeitiger Schutz erreicht wird. Die Aufstellung der zu schützenden Betonbauwerke kann in unterschiedlichsten Klimazonen, bei unterschiedlichsten Beanspruchungen wie am Meer, im Inland oder in Industriegebieten, bei zusätzlich unterschiedlichsten Umwelteinflüssen erfolgen, wogegen die Beschichtung langzeitig sicheren Schutz ermöglichen muss. Neben der Schutzfunktion bestehen hohe Anforderungen an die dekorativen Eigenschaften, so dass eine hohe UV-Beständigkeit und damit langfristige Erhaltung der Farb-und Glanzeigenschaften der Beschichtung gesichert werden muss.

Auch die Verarbeitung der Beschichtungsstoffe ist nicht immer unproblematisch. So sollten sie mittels üblicher technologischer Verfahren unproblematisch verarbeitbar sein. Die Grundbeschichtung sollte die Betonoberfläche gut benetzen und oberflächige Fehlstellen, wie große Poren, Löcher oder kleine Lunker verschließen. Eine kurze Trocknungs- bzw. Aushärtungszeit ist für den Fertigungsdurchlauf von Bedeutung Um eine bessere Umweltverträglichkeit zu gewährleisten, sollten die Beschichtungen lösungsmittelfrei bzw. wasserverdünnbar verarbeitet werden können.

So beschreibt DE 10 2012 203 280 ein Verfahren zur Beschichtung von Betonoberflächen, insbesondere von Türmen für Windkraftanlagen, bestehend aus einem Spachtel, basierend auf einem lösungsmittelfreien 2K-Polyharnstoff und einer Deckschicht, ebenfalls basierend auf 2K-Polyharnstoff. Die Spachtelmasse wird dabei mit einem Spachtel appliziert, die Applikation der Deckbeschichtung erfolgt beispielsweise mittels Rollen. Nachteilig ist, dass der beschriebene Spachtel auf sandigen Betonoberflächen nicht ausreichend benetzt und penetriert wird, so dass die Haft- und Scherfestigkeit für einen sicheren Langzeitschutz nicht gewährleistet werden kann.

Da die in der DE 10 2012 203 280 beschriebene Beschichtung und die Betonoberfläche aus Werkstoffen chemisch völlig verschiedener Zusammensetzung bestehen, kommt es des Weiteren bei Temperaturwechseln zu Spannungen und Drücken innerhalb der Beschichtung, die zu kleinen Rissen führen können. Durch diese Fehlstellen in der Beschichtung dringen Feuchtigkeit und korrosionsstimulierende Atmosphärilien in den Beton ein, was zur Korrosion des Betons und der Stahlbewehrung führt.

Die DE 199 54 829 A1 offenbart wässrige Beschichtungszusammensetzungen, die u.a. als Bodenbeschichtungs- oder Dämmmassen für Betonsysteme verwendet werden können. Diese setzen sich zusammen aus Epoxidharz, Härter, Füllstoffen, Offenzeitverlängerern, Rheologieadditiven, und Wasser. Zusätzlich können - aber müssen nicht - Zusatzstoffe wie Pigmente, Beschleuniger, Entschäumer, Zement oder Antiabsetzmittel beigemischt werden, wobei in allen Ausführungsbeispielen nur Pigmente und Entschäumer als Zusatzstoffe angegeben werden.

Schließlich beschreibt die DE 100 32 305 A1 einen Epoxidharzbeschichtungsstoff zur Ausbildung von Schutzschichten aus Epoxidharz und Härterkomponenten. Dazu wird zunächst eine Trockenmischung aus pulverförmigem oder granuliertem Epoxidharz, Härter und u.a. Zusatzstoffen wie Pigmenten, Füllstoffen oder hydraulisch härtenden Bindemitteln hergestellt. Diese Trockenmischung wird anschließend in Wasser redispergiert oder gelöst und zu einer Beschichtungsmasse verarbeitet.

Ein weiterer wesentlicher Nachteil ist die kurze Verarbeitungszeit der Polyharnstoff-Beschichtungsstoffe. Ebenfalls negativ wirkt sich die große Abhängigkeit der relativen Luftfeuchtigkeit, in Verbindung mit der Lufttemperatur und Objekttemperatur, auf die Trocknung/Härtung aus. Bei hoher relativer Luftfeuchtigkeit im Bereich zwischen 75% und 90%, gegenüber einer mittleren relativen Luftfeuchtigkeit von 65%, trocknen/härten diese Beschichtungen sehr schnell. Bei relativen Luftfeuchtigkeiten unter 35% ist die Trocknung/Härtung im Vergleich zur relativen Luftfeuchtigkeit von 65% deutlich langsamer. Aufgabe der Erfindung ist es daher, ein Beschichtungssystem für Betonoberflächen bereitzustellen, das ein besonders gutes Aushärteverhalten aufweist, einfach auf die Oberfläche aufzutragen ist, ähnliche Werkstoffeigenschaften wie der Untergrund besitzt und eine möglichst kurzzeitige Überarbeitung der Grundbeschichtung mit der Deckschicht ermöglicht. Außerdem sollte eine hohe Umweltverträglichkeit gewährleistet sein.

Gelöst wird die Aufgabe durch ein Beschichtungssystem und ein Verfahren zur Applikation des Beschichtungssystems gemäß der unabhängigen Ansprüche.

Erfindungsgemäß wird die Aufgabe gelöst durch ein Beschichtungssystem für Betonoberflächen umfassend
- eine Grundbeschichtung, bestehend aus einem 3K-System, umfassend eine wasserverdünnbare, 2K-Bindemittelkomponente und ein anorganisches, mineralisches Bindemittel,
   und
- eine Deckbeschichtung,
wobei die wasserverdünnbare Bindemittelkomponente in der Grundbeschichtung mindestens eine niedrigmolekulare EP-Harz-Komponente und mindestens eine EP-Härter-Komponente umfasst und wobei die Deckbeschichtung ausgewählt ist aus einem wasserverdünnbaren 2K-PUR-Lack oder einem wasserverdünnbaren 1 K-Lack.

Die Deckbeschichtungen nach DE 10 2012 203 280 für Betonoberflächen enthalten erhebliche Anteile Lösungsmittel, die zu einer hohen Umweltbelastungen führen. Zur Reduzierung der Umweltbelastung müssen Großverarbeiter durch technische Zusatzmaßnahmen, z.B. durch Nachverbrennung, den Anteil der emittierten Lösemittel reduzieren.

Erfindungsgemäß umfasst die Grundbeschichtung eine wasserverdünnbare Bindemittelkomponente, die mindestens eine niedrigmolekulare EP-Harz-Komponente und mindestens eine EP-Härter-Komponente umfasst.

Erfindungsgemäß steht "niedrigmolekular" für ein Epoxid-Äquivatlentgewicht kleiner 300 g/Eq.

Die wasserverdünnbaren Beschichtungsstoffe enthalten deutlich weniger Lösemittel als High Solid oder Ultra High-Solid-Beschichtungsstoffe, belasten damit deutlich weniger die Umwelt durch emittierte Lösemittel und ermöglichen damit dem Großverarbeiter die geltenden staatlichen Vorgaben (Bundesimmissionsschutzgesetz) einzuhalten.

Unter Lösungsmittel im Sinne der Erfindung werden Lösungsmittel im Sinne der TRGS (Technische Regeln für Gefahrstoffe) 610 der Bundesanstalt für Arbeitsschutz und Arbeitsmedizin (BAuA) verstanden, nach der nur flüchtige organische Lösungsmittel mit einem Siedepunkt bis 200 °C als Lösungsmittel bezeichnet werden, die bei Normalbedingungen (20°C und 101,3 kPa) flüssig sind und dazu verwendet werden, andere Stoffe zu lösen oder zu verdünnen, ohne sie chemisch zu verändern.

In einer Ausführungsform handelt es sich bei der niedrigmolekularen EP-Harz-Komponente um ein wasserverdünnbares Flüssigharz, welches ausgewählt ist, aus Bisphenol-A/F-Epoxidharz oder Bisphenol A-Epoxidharz oder Bisphenol-F-Epoxidharz mit einem Epoxid-Äquivatlentgewicht kleiner 300, bevorzugt von 150 bis 300 g/Eq, besonders bevorzugt 180 bis 280 g/Eq, ganz besonders bevorzugt 180 bis 210 g/Eq.

In einer weiteren Ausführungsform beträgt die dynamische Viskosität der niedrigmolekularen EP-Harz-Komponente nach DIN EN ISO 3219 5000 bis 20000 mPa*s, besonders bevorzugt 7000 bis 15000 mPa*s. Die Dichte nach DIN EN ISO 2811-2 beträgt vorzugsweise 1 bis 1.5 g/cm³, besonders bevorzugt 1.15 bis 1.2 g/cm³.

In einer weiteren Ausführungsform handelt es sich bei der EP-Härterkomponente um ein Phenalkamin. In einer weiteren Ausführungsform ist die EP-Härterkomponente ein Härtergemisch. Das Härtergemisch umfasst bevorzugt aliphatisches Polyamin-Addukt, ein Mannichbase-Addukt und einen Katalysator.

In einer weiteren Ausführungsform enthält die Grundbeschichtung als Härterkomponente ein Phenalkamin mit einem H-Äquivalentgewicht von 150 bis 400 g/mol, bevorzugt 200 bis 350 g/mol.

Die Anwendung des Phenalkamins erfolgt bevorzugt in Wasser gelöst, vorzugsweise bei einer Konzentration (Massenanteil) von 40 bis 70%.

In einer weiteren Ausführungsform ist die EP-Härterkomponente ein Härtergemisch, umfassend ein aliphatisches Polyamin-Addukt mit einem H-Äquivalentgewicht von 50 bis 250 g/mol, bevorzugt 100 bis 200 g/mol, ein Mannichbase-Addukt mit einem H-Äquivalentgewicht von 150 bis 300 g/mol, bevorzugt 100 bis 200 g/mol und einen Katalysator auf Basis von Tris-2,4,6-dimethylaminomythylphenol.

Die Anwendung des Polyamin-Addukts erfolgt vorzugsweise in Wasser gelöst, der Massean-teil beträgt dabei bevorzugt 65 bis 90%, besonders bevorzugt 70 bis 85%.

Die Anwendung des Mannichbase-Addukts erfolgt vorzugsweise in Wasser gelöst, der Masseanteil beträgt dabei bevorzugt 35 bis 75%, besonders bevorzugt 40 bis 70%.

Bei dem Katalysator handelt es sich in einer Ausführungsform um einen Katalysator auf Basis von Tris-2,4,6-dimethylaminomythylphenol.

In einer weiteren Ausführungsform beträgt das Massenverhältnis EP-Harz-Komponente: EP-Härter-Komponente 2:1 bis 10:1.

Damit können die Eigenschaften der Grundbeschichtung den Beschaffenheiten der jeweiligen Betonoberfläche individuell angepasst werden.

Erfindungsgemäß umfasst die Grundbeschichtung als 3-Komponenten-System neben der wasserverdünnbaren 2K-Bindemittelkomponente ein anorganisches, mineralisches Bindemittel.

In einer weiteren Ausführungsform handelt es sich bei dem anorganischen, mineralischen Bindemittel um ein anorganisches, mineralisches Bindemittel, das hydraulisch härtet.

Vorteilhaft wird damit die chemische Härtung der Epoxidharze mit dem Prozess der hydraulischen Härtung kombiniert. Dabei werden Wasserstoffbrücken zwischen den einzelnen Komponenten ausgebildet und es bilden sich Kristalle aus, wie es auch aus dem Aushärtungsprozess von Beton bekannt ist.

Dies ermöglicht eine besonders schnelle und effiziente Trocknung und Härtung der Grundbeschichtung. Hervorzuheben ist auch das gut erkennbare Ende der Topfzeit und die schnelle Überarbeitbarkeit, was die Verarbeitung und Applikation erheblich erleichtert.

Die hydraulische Bindemittelkomponente bestimmt mit ihrem Anteil in der Beschichtung maßgeblich die physikalischen und mechanischen Schichteigenschaften. Es resultiert ein analoges Werkstoffverhalten zwischen Beton und Grundbeschichtung. Besonders bedeutend ist dies bezüglich des Temperaturwechselverhaltens (Tag/Nacht, Sonne/Schatten) und den damit verbundenen Veränderungen in Länge und Volumen, die zu Rissen führen können. Damit können Lunker, Löcher und große Poren in der Betonoberfläche effizient ausgeglichen werden und es kommt auf Grund der ähnlichen Materialeigenschaften zwischen Oberfläche und Spachtel//Beschichtung zu keinen Spannungen und Drücken, die zu Rissen und Brüchen in der Beschichtung führen können.

Der erfindungsgemäße 3K-Grundbeschichtungsstoff erreicht durch die Kombination der chemischen und hydraulischen Härtung und damit der betonaffinen Eigenschaften eine sehr gute Haftung auch auf kritischen Betonoberflächen.

Ein weiterer Vorteil in der Kombination der EP-Harze mit der hydraulisch härtenden Komponente liegt in der wesentlich höheren mechanischen Belastbarkeit, hohen Abreißwerten und hoher Schwerfestigkeit, womit für nachfolgende Beschichtungsaufbauten ein idealer Untergrund geschaffen wird.

In einer weiteren Ausführungsform enthält das anorganische, mineralische Bindemittel Calciumsilicate, Calciumaluminate, Calciumaluminatferrite. Optional umfasst das anorganische, mineralische Bindemittel Calciumsulfat.

Besonders bevorzugt enthält das anorganische, mineralische Bindemittel neben Calciumsilicaten, Calciumaluminaten und Calciumaluminatferriten Calciumsulfat.

In einer bevorzugten Ausführungsform der Erfindung ist das anorganische, mineralische Bindemittel Zement.

Zur Herstellung der 3K-Grundbeschichtung werden EP-Härterkomponente, EP-Harz-Komponente und anorganisches, mineralisches Bindemittel mit Wasser gemischt.

Vorteilhafterweise kann die Grundbeschichtung auf die erforderlichen Verarbeitungs- und Anwendungseigenschaften mittels unterschiedlichem Wasseranteil angemischt werden. Als Tiefgrund wird, gemäß nachfolgender Anwendungsbeispiele, gegenüber der Nutzung als Spachtel mehr Wasserzusatz erforderlich sein, um sie gemäß der individuellen Oberflächenbeschaffenheit des Betons zu verarbeiten.

Bei Betonoberflächen mit besonders vielen Fehlstellen wie, Poren, Löcher oder Lunker wird vorzugsweise der Grundbeschichtungsmasse ein geringerer Wasseranteil beigemischt, so dass diese durch Spachteln aufgetragen werden kann. Der Masseanteil an Wasser beträgt für eine spachtelfähige Masse 5 bis 40%, bevorzugt 10 bis 20%. Damit lassen sich auch größere Poren, Lunker und Löcher in der Oberfläche verschließen und die Oberfläche ebnen.

Für Betonoberflächen mit geringen Fehlstellen wird der Grundbeschichtungszusammensetzung ein Masseanteil an Wasser von bis 30%, bevorzugt 20% der Gesamtmasse der Grundbeschichtung beigemischt, so dass diese eine rollbare bzw. spritzbare Konsistenz aufweist. Damit kann die Grundbeschichtung vorteilhaft durch Rollen oder Spritzen appliziert werden.

Erfindungsgemäß umfasst das Beschichtungssystem neben der Grundbeschichtung auch eine Deckbeschichtung, wobei die Deckbeschichtung ausgewählt ist, aus einem wasserverdünnbaren 2K-PUR-Lack oder einem wasserverdünnbaren 1-K-Lack.

In einer Ausführungsform umfasst die Deckbeschichtung einen wasserverdünnbaren 2K-PUR-Lack.

In einer weiteren Ausführungsform umfasst der 2K-PUR-Lack eine Stammkomponente und eine Härterkomponente.

In einer weiteren Ausführungsform umfasst die Stammkomponente eine hydroxylgruppenhaltige Acrylharzemulsion, ein Polysiloxan, einen Katalysator eine Pigment-/Füllstoffkombination sowie Lackaddititve.

In einer weiteren Ausführungsform umfasst die Härterkomponente ein aliphatisches Polyisocyanat.

Vorteilhaft führt die Kombination von hydroxylgruppenhaltigen Acrylatharz und Polysiloxan, verbunden mit der katalytischen Härtung zur Ausbildung einer stark hydrophoben Oberfläche, sodass Anwendungen im Außenbereich problemlos möglich sind. Die Frühwasserfestigkeit wird dabei bereits nach kurzer Trocknung und Härtung von 2 bis 4, bevorzugt 3 Stunden erreicht.

In einer Ausführungsform weist die Acrylharzemulsion in der Stammkomponente des 2K-PUR-Lacks einen Festkörpergehalt nach DIN EN ISO 3251 von 35 bis 50%, besonders bevorzugt von 40 bis 47% auf. Die Hydroxylzahl der Acrylharzemulsion nach DIN 53240 beträgt 70 bis 130 mg KOH/g, besonders bevorzugt 80 bis 120 mg KOH/g. Der pH Wert der Acrylharzemulsion nach DIN ISO 976 beträgt bevorzugt 6.8 bis 8.8, besonders bevorzugt 7.0 bis 8.5.

In einer weiteren Ausführungsform handelt es sich bei dem Polysiloxan in der Stammkomponente des 2K-PUR-Lacks um ein wasserverdünnbares Polysiloxan, modifiziert mit Siliconharz mit einem Festkörpergehalt von bevorzugt 50 bis 60 Gew.%, besonders bevorzugt 52 bis 57 Gew% und einem pH-Wert von bevorzugt 6.5 bis 7.5, besonders bevorzugt 7.

In einer vorteilhaften Ausgestaltung enthält die Stammkomponente des 2K-PUR-Lacks einen Polyether-Polyurethan-Verdicker und/oder ein modifiziertes Hectorite. Besonders bevorzugt ist eine Polyether-Polyurethan-Dispersion mit einem Festköperanteil von 20 bis 30 Gew%, bevorzugt 25 Gew%.

Damit kann vorteilhaft die Rheologie des Lacks eingestellt werden.

Bevorzugt enthält die Stammkomponente des 2K-PUR-Lacks als Katalysator eine Dibutylzinn-dilaurat-Emulsion.

In einer weiteren Ausführungsform umfasst die Härterkomponente des 2K-PUR-Lacks ein aliphatisches Polyisocyanat. Bevorzugt handelt es sich dabei um ein alyphatisches Polyisocyanat auf Basis von HDI-Trimerisat mit einem NCO-Gehalt von 15 bis 30, besonders bevorzugt 20 bis 25 % und einer Viskosität nach DIN EN ISO 3219/A.3 von bevorzugt 1100±400 bei 23°C.

In einer weiteren Ausführungsform beträgt das Massenverhältnis Stammkomponente : Härterkomponente in dem 2K-PUR-Lack 8:1 bis 10:1.

Vorteilhaft ermöglicht der wasserverdünnbare 2K-PUR-Lack die Applikation als Glatt- oder Strukturlack, die Applikation kann durch Rollen oder Spritzen erfolgen. Die Applizierung und Aushärtung des Lacks in einer apfelsinennarbigen Struktur, die durch die Applikationsart bestimmt werden kann, ist mit den bisher bekannten Lacken nicht möglich.

In einer weiteren Ausführungsform umfasst die Deckbeschichtung einen 1 K-Lack.

In einer weiteren Ausführungsform ist der wasserverdünnbare 1 K-Lack ausgewählt aus wasserverdünnbaren 1 K-Lacken auf Basis von Acrylatdispersionen und/oder Polyurethandispersionen und ist elastifiziert zur Überbrückung von Bauwerksrissen.

In einer weiteren Ausführungsform besteht die Grundbeschichtung (Tiefgrund) aus den wasserverdünnbaren Bindemittelkomponenten EP-Harz-Emulsion und EP-Härter, pigmentiert oder unpigmentiert, die nach intensiver Vermischung appliziert werden. Der Tiefgrund kann zur Bildung eines farblichen Kontrasts gegenüber der Betonoberfläche pigmentiert werden, wobei die üblichen Füllstoffe und Pigmente wie Kreide, Talkum oder Titandioxid eingesetzt werden und/oder der Einsatz pulverförmiger, anorganischer Bindemittelzusätze unmittelbar vor der Applikation erfolgt. Dieses Dreistoffgemisch kann je nach Zustand der Betonoberfläche vor der Applikation in seiner Zusammensetzung variiert werden.

In einer bevorzugten Ausführungsform der Erfindung ist die anorganisch, mineralische Bindemittelkomponente Zement.

Die erfindungsgemäße Kombination der wässerigen, niedrigmolekularen 2K-Epoxidharz-Lösung mit der pulverförmigen, anorganisch mineralischen Bindemittelkomponente führt nach Applikation auf die Betonoberfläche durch zwei verschiedene Härtungsmechanismen (chemischen Reaktion des Epoxidharzes und hydraulische Härtung des Zements) zu extrem festhaftenden und Oberflächenfehlstellen füllenden/glättenden Beschichtungen.

Der Anteil der zementösen Zusätze, zum Beispiel zementgebundene, pulverförmige Spachtel, in unterschiedlichen Mengen, ermöglicht die Schließung kleiner Lunker, Löcher und Poren und führt infolge der chemischen und hydraulischen Härtung zu sehr fest haftenden, mechanisch robust belastbaren Beschichtungen und bietet für nachfolgende Beschichtungsaufbauten eine ideale Grundbeschichtung.

Die Bildung der Grundbeschichtung resultiert aus einem Dreistoffgemisch, aus dem vorstehend dargelegten Tiefgrund wird durch weiteren Zusatz des pulverförmigen, zementgebundenen Spachtels bzw. zementöser Füllstoffe und/oder anderer mineralischer Zuschlagstoffe die hydraulisch härten, vor der Applikation auf die zu beschichtende Betonoberfläche hergestellt, wobei die zugegebene Menge die Verarbeitungseigenschaften des Spachtels bestimmen.

Erfindungsgemäß erfolgt die Aushärtung der Grundbeschichtung chemisch (EP-Harz/Härter) und hydraulisch (Zement).

Das Mischungsverhältnis (Gewicht) Stammkomponente : Härter für den Tiefgrund/Spachtel variiert je nach Zusatz der Pigment-/Füllstoffanteile zwischen 2 : 1 bis 10 : 1

In einer weiteren Ausführungsform der Erfindung basiert der wasserverdünnbare 2K-PUR-Lack in Mischung aus der Stammkomponente, bestehend aus einer hydroxylgruppenhaltigen Acrylharzemulsion, einem Polysiloxan, einem Katalysator, einer Pigment-/Füllstoffkombination, sowie typischen Lackadditiven und einer Härterkomponente bestehend aus einem aliphatischen Polyisocyanat.

Das Mischungsverhältnis Stammkomponente : Härterkomponente (Gewichtsverhältnis) umfasst den Bereich von 8 : 1 bis 10 : 1.

Der wasserverdünnbare 2K-PUR-Lack ermöglicht die Applikation als Glattlack und Strukturlack, wobei erfindungsgemäß die Rheologie durch einen wässrigen Polyether-Polyurethan-Verdicker und/oder ein modifiziertes Hectorite eingestellt wird.

Die Beschichtung erreicht nach kurzer Trocknung/Härtung bereits nach 3 Stunden die Frühwasserfestigkeit mit Ausbildung einer stark hydrophoben Oberfläche, ermöglicht durch die erfindungsgemäße Kombination des hydroxylgruppenhaltigenAcrylharzes, des Polysiloxananteils und der katalytischen Härtung.

Gegenstand der Erfindung ist weiterhin ein Verfahren zur Applikation des erfindungsgemäßen Beschichtungssystems.

Das Verfahren zur Applikation des erfindungsgemäßen Beschichtungssystems umfasst dabei die Schritte:
- Applikation der 3K-Grundbeschichtung umfassend eine 2K-wasserverdünnbare Bindemittelkomponente und einen anorganisches, mineralisches Bindemittel,
   wobei die wasserverdünnbare Bindemittelkomponente in der Grundbeschichtung mindestens eine niedrigmolekulare EP-Harz-Komponente und mindestens eine EP-HärterKomponente umfasst und
- Applikation der Deckbeschichtung, wobei die Deckbeschichtung ausgewählt ist, aus einem wasserverdünnbaren 2K-PUR-Lack oder einem wasserverdünnbaren 1-K-Lack.

In einer Ausführungsform der Erfindung erfolgt vor der Applikation der Grundbeschichtung eine Reinigung der Betonoberfläche zur Entfernung von Schmutz- oder Staubpartikeln von der Oberfläche.

In einer weiteren Ausführungsform umfasst die Deckbeschichtung einen wasserverdünnbaren 2K-PUR-Lack.

In einer weiteren Ausführungsform erfolgt die Applikation der Grundbeschichtung durch Rollen, Spachteln oder Spritzen. Die Applikation durch Spritzen erfolgt vorzugsweise durch Hochdruck-, Airless- oder Airmix-Spritzverfahren.

Die Deckbeschichtung kann vorteilhaft schon nach der physikalischen Trocknung der Grundbeschichtung, nach ca. 20 min, erfolgen.

In einer weiteren Ausführungsform erfolgt die Applikation der Deckbeschichtung durch Rollen oder Spritzen. Die Applikation durch Spritzen erfolgt vorzugsweise durch Hochdruck-, Airless- oder Airmix-Spritzverfahren.

Ein weiterer Gegenstand der Erfindung ist die Verwendung eines erfindungsgemäßen Beschichtungssystems zur Beschichtung von Betonoberflächen sowie ein Verfahren zur Applikation des erfindungsgemäßen Beschichtungssystems.

Das erfindungsgemäße Beschichtungssystem ist den individuellen Erfordernissen der Betonoberfläche anpassbar und bietet eine effiziente Möglichkeit zur Beschichtung von Betonoberflächen, insbesondere Betonoberflächen, die atmosphärischen Belastungen ausgesetzt sind.

Zur Realisierung der Erfindung ist es auch zweckmäßig, die vorbeschriebenen Ausführungsformen und Merkmale der Ansprüche zu kombinieren.

Nachfolgend soll die Erfindung anhand einiger Ausführungsbeispiele eingehender erläutert werden. Die Ausführungsbeispiele sollen dabei die Erfindung beschreiben, ohne diese zu beschränken.

### Ausführungsbeispiel 1:

Zur Herstellung einer Grundbeschichtung werden zunächst Komponente A und Komponente B (in tabellarisch aufgeführter Zusammensetzungim Mischungsverhältnis (Massenanteil in %) von **A : B = 100 : 40** zu einer Mischung C miteinander gemischt:

### Mischung C

### Komponente A (Härter)

| Bestandteil | Massenanteil (%) |
|---|---|
| 1)Polyamin-Addukt- Lösung (80%-ig) | 20,00 |
| 2)Mannich-Basen-Addukt (50%-ig) | 12,00 |
| 3)Katalysator | 3,00 |
| 4)Butylglykol | 2,00 |
| 5)Substrat-Netzmittel | 0,40 |
| 6)Entschäumer | 0,20 |
| 7)Titandioxid | 3,00 |
| 8)Eisenoxidgelb | 0,50 |
| 9)Flammruß | 0,20 |
| 10)Wasser | 57,00 |
| | 100,00 |

### Komponente B (EP-Harz)

| | |
|---|---|
| 1)Bisphenol-A/F-Harz-Flüssigharz, wasseremulgierbar | 100,00 |

Außerdem wird eine Mischung D gemäß folgender Zusammensetzung bereitgestellt:

### Mischung D

| Bestandteil | | Massenanteil (%) |
|---|---|---|
| 1) | Tricalciumsilicat | 40,00 |
| 2) | Dicalciumsilicat | 40,00 |
| 3) | Tricalciumaluminat | 15,00 |
| 4) | Tricalciumaluminatferrit | 5.00 |
| | | 100,00 |

1a) Um eine roll- und spritzfähige Masse für die Grundbeschichtung zu erhalten, wird nun Mischung C mit Wasser und einer, das anorganische, mineralische Bindemittel enthaltenden Mischung D in folgender Zusammensetzung angerührt:

| Bestandteil | | Massenanteil (%) |
|---|---|---|
| 5) | Mischung C | 40,0 |
| 6) | Mischung D | 40,00 |
| 7) | Waser | 20,00 |
| | | 100,00 |

Die so erhaltene Grundbeschichtung wird in einem Roll- oder Spritzverfahren auf die vorher sorgfältig gereinigte Betonoberfläche appliziert.
1b) Um eine spachtelfähige Masse für die Grundbeschichtung zu erhalten wird Mischung C mit Wasser und einer, das anorganische, mineralische Bindemittel enthaltenden Mischung D in folgender Zusammensetzung angerührt:

| Bestandteil | | Massenanteil (%) |
|---|---|---|
| 8) | Mischung C | 30,0 |
| 9) | Wasser | 10,00 |
| 10) | Mischung D | 60,00 |
| | | 100,00 |

Die so erhaltene Grundbeschichtung wird im Spachtelverfahren auf die vorher sorgfältig gereinigte Betonoberfläche appliziert.

### Ausführungsbeispiel 2

Auf die, wie in Ausführungsbeispiel 1 zusammengesetzte Grundbeschichtung kann nach oberflächlicher, physikalischer Trocknung, die Deckbeschichtung aufgetragen werden.

Zur Herstellung der Deckbeschichtung werden zunächst die Komponenten der Stammkomponente in folgender Zusammensetzung miteinander gemischt:

### Stammkomponente:

| Bestandteil | | Massenanteil (%) |
|---|---|---|
| 1.) | Hydroxylgruppenhaltige Acrylat-Emulsion | 54,00 |
| 2.) | deionisiertes Wasser | 7,00 |
| 3.) | Polysiloxan-Emulsion | 5,00 |
| 4.) | Netzmittel | 0,60 |
| 5.) | Entschäumer | 0,50 |
| 6.) | Dibutylzinn-dilaurat Emulsion | 1,00 |
| 7.) | Titandioxid | 20,00 |
| 8.) | Bayferrox | 1,50 |
| 9.) | Flammruß | 0,10 |
| 10.) | Calciumcarbonat | 8,00 |
| 11.) | Polyether-Polyurethan-Verdicker | 0,30 |
| 12.) | Proqlyde DMM | 2.00 |
| | | 100,00 |

Danach werden die Bestandteile der Härterkomponente gemäß folgender Zusammensetzung gemischt:

### Härterkomponente:

| Bestandteil | | Massenanteil (%) |
|---|---|---|
| 11) | Hexamethylendiisocynat | 75,00 |
| 12) | Proglyde DMM | 25,00 |
| | | 100,00 |

Zur Herstellung der Mischung des wasserverdünnbaren 2K-PUR-Decklackes werden die Stammkomponente und die Härterkomponente gemischt im Mischungsverhältnis Stamm : Härter = 10 : 1.

### Ausführungsbeispiel 3

Die Grundbeschichtung wird mittels Elektrorührwerk in der Zusammensetzung gemäß Ausführungsbeispiel 1b) über eine Zeit von 3 min angerührt. Anschließend wird die Masse mittels Spachtel auf die Betonoberfläche aufgezogen, wobei kleine Lunker, Löcher und Poren gefüllt werden. Gegenläufig dazu wird die überschüssige Spachtelmasse abgestoßen, wobei eine glatte, geschlossene Oberfläche entsteht. Nach einer Zwischentrocknungszeit von 1 Stunde unter den Bedingungen von Objekttemperatur und Lufttemperatur 20°C und 65% rel. Luftfeuchtigkeit, wird die Deckbeschichtung, ein 2K-PUR-Lack gemäß Ausführungsbeispiel 2, durch Airless-Spritzen mit einer Nassschichtdicke von 175 µm appliziert. Die Frühfestigkeit der Deckbeschichtung ist nach 4 h unter den Bedingungen von Objekttemperatur und Lufttemperatur 20°C und 65% rel. Luftfeuchtigkeit erreicht.

### Ausführungsbeispiel 4

Die Grundbeschichtung wird mittels Elektrorührwerk in der Zusammensetzung gemäß Ausführungsbeispiel 1a) über eine Zeit von 3 min angerührt. Anschließend wird die Masse mittels Rolle mit einer Nassschichtdicke von 100 µm auf die Betonoberfläche auftragen. Nach einer Zwischentrocknungszeit von 1 Stunde unter den Bedingungen von Objekttemperatur und Lufttemperatur 20°C und einer relativen Luftfeuchtigkeit von 65% wird die Deckbeschichtung, ein 2K-PUR-Lack gemäß Ausführungsbeispiel 2, durch Rollen appliziert. Nach einer Zwischentrocknungszeit von 30 min erfolgt die Applikation einer weiteren Schicht der Deckbeschichtung durch Rollen. Die durch die Rollapplikation erzeugte apfelsinennarbige Struktur bleibt auch nach der Aushärtung erhalten. Die Frühfestigkeit der Deckbeschichtung ist nach 4 h unter den Bedingungen von Objekttemperatur und Lufttemperatur 20°C und 65% rel. Luftfeuchtigkeit erreicht.

### Ausführungsbeispiel 5:

In einem weiteren Ausführungsbeispiel ist die Grundbeschichtung aus einem EP-Harz (wasseremulgiert) mit einem Bisphenol- A/F-Epoxidharz mit einem Epoxid-Äquivalentgewicht (g/Eq)= 198 ± 10 und einer dynamische Viskosität nach DIN EN ISO 3219 von 7000 - 15000 mPa*s (100 1/s; 23°C) und einer Dichte nach DIN EN ISO 2811-2: 1,15 - 1,2g/cm³ sowie einem Härter ausgebildet.

Der EP-Härter besteht aus einem A) Härtergemisch und/oder einem B) Härter.
A) Das Härtergemisch: bestehend aus einer Mischung aus einem aliphatischen Polyamin-Addukt, einem Mannichbase-Addukt und einem Katalysator.
   Das aliphatische Polyamin-Addukt weist dabei ein H-Äquivalentgewicht von 110g/mol bis 180g/mol auf und wird zur Anwendung in Wasser gelöst mit einer Konzentration von 70%-85%.
   Das Mannichbase-Addukt weist ein H-Äquivalentgewicht von 200g/mol bis 280g/mol auf und wird zur Anwendung in Wasser gelöst bei einer Konzentration von 40% - 70%.
   Als Katalysator für die Härtungsreaktion von Epoxydharzen mit Polyamin-Addukten auf Basis dient tris-2,4,6-dimethylaminomethylphenol.
B) Der Härter ist ein Phenalkamin mit einem H-Äquivalentgewicht von 250g/mol bis 300g/mol und wird zur Anwendung in Wasser gelöst bei einer Konzentration von 45% - 60%.

### Ausführungsbeispiel 6:

In einem weiteren Ausführungsbeispiel der Erfindung weist die 2K-PUR Deckbeschichtung die nachfolgende Zusammensetzung auf:
Die Stammkomponente umfasst eine wässrige, hydroxylgruppenhaltige Acrylharzemulsion mit einem Festkörpergehalt nach DIN EN ISO 3251 von 40 bis 47(%), einer Hydroxylzahl nach DIN 53240 von 80 bis 120 mg KOH/g und einem pH-Wert nach DIN ISO 976 von 7,0 bis 8,5, ein wasserverdünnbares Polysiloxan, modifiziert mit Siliconharz, mit einem Festkörpergehalt von 52 - 57 Gew% und einem pH-Wert von 7, einem Polyether-Polyurethan-Verdicker mit einem Festkörpergehalt von um 25 Gew% sowie einer Dibutylzinn-dilaurat-Emulsion als Katalysator.

Die Härterkomponente ist ein aliphatisches Polyisocyanat auf Basis von HDI-Trimerisat mit einem NCO-Gehalt von 20 - 25% und einer Viskosität bei 23°C (mPa*s) nach DIN EN ISO 3219/A.3 von 1100 ± 400.

### Ausführungsbeispiel 7:

In einem weiteren Ausführungsbeispiel wird nach nachfolgend beispielhaft eine Zusammensetzung für eine wasserverdünnbarer 2K-EP-Grundbeschichtung wiedergeben.

Das Mischungsverhältnis der Komponente A : Komponente B beträgt 100 : 40.

### Komponente A (Härter)

| Bestandteil | Massenanteil (%) |
|---|---|
| 1)Polyamin-Addukt- Lösung (80%-ig) | 20,00 |
| 2)Mannich-Basen-Addukt (50%-ig) | 12,00 |
| 3)Katalysator | 3,00 |
| 4)Butylglykol | 2,00 |
| 5)Substrat-Netzmittel | 0,40 |
| 6)Entschäumer | 0,20 |
| 7)Titandioxid | 3,00 |
| 8)Eisenoxidgelb | 0,50 |
| 9)Flammruß | 0,20 |
| 10)Wasser | 57.00 |
| | 100,00 |

### Komponente B

| | |
|---|---|
| 1)Bisphenol-A/F-Harz-Flüssigharz, wasseremulgierbar | 100,00 |

### Ausführungsbeispiel 8:

In einem weiteren Ausführungsbeispiel wird die wasserverdünnbare 2K-EP-Grundbeschichtung gemäß dem vorgehenden Ausführungsbeispiel wie folgt zur Applikation auf der Betonoberfläche gemischt:

| Bestandteil | Massenanteil (%) |
|---|---|
| 1)EP-Grundbeschichtung (in Mischung) | 40,0 |
| 2)Wasser | 40,0 |
| 3)zementhaltiger Spachtel | 20.0 |
| | 100,0 |

Diese Mischung kann mittels Rollen oder Spritzen auf der Betonoberfläche appliziert werden.

In einer alternativen Ausgestaltung des Ausführungsbeispiels wird die wasserverdünnbare 2K-EP-Grundbeschichtung wie nachfolgend gemischt:

| Bestandteil | Massenanteil (%) |
|---|---|
| 1)EP-Grundbeschichtung (in Mischung) | 30,0 |
| 2)Wasser | 10,0 |
| 3)zementhaltiger Spachtel | 60.0 |
| | 100,0 |

Diese Mischung kann aufgrund des höheren Zementanteils auf der Betonoberfläche als Spachtel appliziert werden und eignet sich besonders für Betonoberflächen mit Lunkern und Löchern.

### Ausführungsbeispiel 9:

In einem weiteren Ausführungsbeispiel ist nachfolgend beispielhaft die Zusammensetzung einer wasserverdünnbaren 2K-PUR-Deckbeschichtung wiedergegeben:

### Stammkomponente:

| Bestandteil | | Massenanteil (%) |
|---|---|---|
| 1.) | Hydroxylgruppenhaltige Acrylat-Emulsion | 54,00 |
| 2.) | deionisiertes Wasser | 7,00 |
| 3.) | Polysiloxan-Emulsion | 5,00 |
| 4.) | Netzmittel | 0,60 |
| 5.) | Entschäumer | 0,50 |
| 6.) | Dibutylzinn-dilaurat Emulsion | 1,00 |
| 7.) | Titandioxid | 20,00 |
| 8.) | Bayferrox | 1,50 |
| 9.) | Flammruß | 0,10 |
| 10.) | Calciumcarbonat | 8,00 |
| 11.) | Polyether-Polyurethan-Verdicker | 0,30 |
| 12.) | Proqlyde DMM | 2.00 |
| | | 100,00 |

### Härterkomponente:

| | |
|---|---|
| 1.) Hexamethylendiisocynat | 75,00 |
| 2.) Proglyde DMM | 25,00 |
| | 100,00 |

Das Mischungsverhältnis von Stammkomponente : Härterkomponente beträgt 10 : 1.

## Patentansprüche

1. Beschichtungssystem für Betonoberflächen umfassend
- eine Grundbeschichtung, umfassend eine wasserverdünnbare Bindemittelkomponente und ein anorganisches, mineralisches Bindemittel,
und
- eine Deckbeschichtung,
wobei die wasserverdünnbare Bindemittelkomponente in der Grundbeschichtung mindestens eine niedrigmolekulare EP-Harz-Komponente mit einer EP-Äquivalentmasse von kleiner 300 und mindestens eine EP-Härter-Komponente umfasst und wobei die Deckbeschichtung ausgewählt ist, aus einem wasserverdünnbaren 2K-PUR-Lack oder einem wasserverdünnbaren 1-K-Lack.

2. Beschichtungssystem nach Anspruch 1, **dadurch gekennzeichnet, dass** die niedrigmolekulare EP-Harz-Komponente ein EP-Flüssigharz ist, ausgewählt aus Bisphenol-A/F-Epoxidharz oder Bisphenol A-Epoxidharz oder Bisphenol-F-Epoxidharz.

3. Beschichtungssystem nach einem der Ansprüche 1 oder 2, **dadurch gekennzeichnet, dass** die EP-Härterkomponente ausgewählt ist, aus einem Phenylalkamin oder einem Härtergemisch, umfassend ein aliphatisches Polyamin-Addukt, ein Mannichbase-Addukt und einen Katalysator.

4. Beschichtungssystem nach einem der Ansprüche 1 bis 3, **dadurch gekennzeichnet, dass** das anorganische, mineralische Bindemittel hydraulisch härtet.

5. Beschichtungssystem nach einem der Ansprüche 1 bis 4, **dadurch gekennzeichnet, dass** das anorganische, mineralische Bindemittel Calciumsilicate, Calciumaluminate Calciumaluminatferrite und optional Calciumsulfat enthält.

6. Beschichtungssystem nach einem der Ansprüche 1 bis 5, **dadurch gekennzeichnet, dass** die Grundbeschichtung als Härterkomponente ein Phenylalkamin mit einem H-Äquivalentgewicht von 150 bis 400 g/mol enthält.

7. Beschichtungssystem nach einem der Ansprüche 1 bis 6, **dadurch gekennzeichnet, dass** die Grundbeschichtung als Härterkomponente ein Härtergemisch umfassend ein aliphatisches Polyamin-Addukt mit einem H-Äquivalentgewicht von 50 bis 250 g/mol, ein Mannichbase-Addukt mit einem H-Äquivalentgewicht von 150 bis 300 g/mol und einen Katalysator auf Basis von Tris-2,4,6-dimethylamino-methylphenol enthält.

8. Beschichtungssystem nach einem der Ansprüche 1 bis 7, **gekennzeichnet dadurch, dass** das Massenverhältnis EP-Harz-Komponente : EP-Härter-Komponente 2:1 bis 10:1 beträgt.

9. Beschichtungssystem nach Anspruch 1, **gekennzeichnet dadurch, dass** der wasserverdünnbare 2K-PUR-Lack eine Stammkomponente, umfassend eine hydroxylgruppenhaltige Acrylharzemulsion, ein Polysiloxan, einen Katalysator, eine Pigment-/Füllstoffkombination sowie Lackaddititve, und eine Härterkomponente umfassend ein aliphatisches Polyisocyanat enthält.

10. Beschichtungssystem nach Anspruch 9, **gekennzeichnet dadurch, dass** die Stammkomponente des 2K-PUR-Lacks Polyether-Polyurethan-Verdicker und/oder ein modifiziertes Hectorite enthält.

11. Beschichtungssystem nach einem der Ansprüche 9 oder 10, **gekennzeichnet dadurch, dass** das Massenverhältnis Stammkomponente : Härterkomponente in dem 2K-PUR-Lack 8:1 bis 10:1 beträgt

12. Beschichtungssystem nach Anspruch 1, **dadurch gekennzeichnet, dass** der 1 K-Lack ausgewählt ist, aus wasserverdünnbaren 1 K-Lacken auf Basis von Acrylatdispersionen und/oder Polyurethandispersionen.

13. Verfahren zur Applikation eines Beschichtungssystems nach einem der Ansprüche 1 bis 12 umfassend die Schritte:
- Applikation der 3K-Grundbeschichtung umfassend eine wasserverdünnbare 2K-Bindemittelkomponente und ein anorganisches, mineralisches Bindemittel, wobei die wasserverdünnbare 2K-Bindemittelkomponente in der Grundbeschichtung mindestens eine niedrigmolekulare EP-Harz-Komponente und mindestens eine EP-Härter-Komponente umfasst und
- Applikation der Deckbeschichtung, wobei die Deckbeschichtung ausgewählt ist aus einem wasserverdünnbaren 2K-PUR-Lack, einem wasserverdünnbaren 1-K-Lack, einem Acrylat-Lack oder einem Acrylat-Copolymer-Lack

14. Verfahren nach Anspruch 13, **dadurch gekennzeichnet, dass** die Deckbeschichtung einen wasserverdünnbaren 2K-PUR-Lack umfasst.

15. Verfahren nach einem der Ansprüche 13 oder 14, **gekennzeichnet dadurch, dass** die Grundbeschichtung durch Spachteln, Rollen oder Spritzapplikation, ausgewählt aus Hochdruck-, Airless- oder Airmix-Spritzverfahren appliziert wird.

16. Verfahren nach einem der Ansprüche 14 oder 15, **gekennzeichnet dadurch, dass** die Applikation der Deckbeschichtung durch Rollen oder Spritzapplikation, ausgewählt aus Hochdruck-, Airless- oder Airmix-Spritzverfahren appliziert wird.

17. Verwendung eines Beschichtungssystems nach einem der Ansprüche 1 bis 12 zur Beschichtung von Betonoberflächen sowie Verwendung eines Verfahrens zur Applikation des Beschichtungssystems nach einem der Ansprüche 13 bis 16 zur Applikation auf Betonoberflächen.
